# EUROPEAN PATENT APPLICATION

(11) **EP 4 817 759 A1**
(43) Date of publication of application: **07.10.2026**
(21) Application number: 25168695.2
(22) Date of filing: 04.04.2025
(51) Int. Cl.: B22D 17/00, B22D 17/22, B62D 21/00, B62D 21/15

(54) **METHOD FOR MANUFACTURING A REAR PART STRUCTURE FOR A VEHICLE BODY**

(71) Applicant: Volvo Car Corporation, 405 31 Göteborg (SE)
(72) Inventor: LEJVELL, Peter, 40531 Göteborg (SE); PETTERSSON, Lars, 40531 Göteborg (SE); CLARK, Austen, 40531 Göteborg (SE)
(74) Representative: Kransell & Wennborg KB

(57) **Abstract**

The disclosure relates to a method for manufacturing a rear part structure (10) for a vehicle body, the method comprising:
- providing a die (1) for a base part (20) of the rear part structure (10), wherein the base part (20) comprises a sleeve portion (21) comprising a first wall (22) and a second wall (23), and wherein the first and second walls (22, 23) are arranged opposite of one another;
- die casting the base part (20) from metal using the die (1), wherein a slide (4) of the die (1) is tilted in relation to the second wall (23) to produce no draft angle or a first draft angle (β) of the first wall (22), wherein the first draft angle (β) is smaller than a second draft angle (β) of the second wall (23);
- inserting a first end portion (31) of an extruded part (30) of the rear part structure (10) in between the first and second walls (22, 23); and
- attaching the extruded part (30) to the base part (20), wherein the extruded part (30) comprises a second end portion (32) opposite of the first end portion (31) for attachment to a bumper (40) of the vehicle body.

## Description

### TECHNICAL FIELD

The present disclosure relates to a method for manufacturing a rear part structure for a vehicle body, a rear part structure for a vehicle body, and a vehicle comprising a vehicle body comprising a rear part structure.

### SUMMARY

Vehicle bodies can comprise several different structures, which may be attached to one another. One of these structures is the rear part structure, which is generally located in the rear end of a vehicle. Typically, the rear part structure is being inter alia used for a trunk of the vehicle, where the rear part structure supports a luggage compartment floor inside the trunk. Luggage or other loads can be placed on the luggage compartment floor inside the trunk and is consequently supported by the rear part structure. The rear part structure however can have many more parts attached thereto, such as, for example, shock absorbers or generally a rear vehicle suspension, batteries, and so on.

Rear part structures of vehicle bodies may comprise a casted base part and one or more thereto attached extruded parts. These extruded parts may be used in the rear part structure of vehicle bodies to function as a connection to rear parts of the vehicle, such as a bumper of the vehicle body.

The extruded parts may deform during a rear crash event. Therefore, it is important that these extruded parts are connected to the base part of the rear part structure in a robust way.

When die casting the base part of the rear part structure, a certain draft angle must always be used to allow release of the base part from the die after casting. This also applies to a sleeve portion of the rear part structure to which the extruded part is attached after the base part is casted with the sleeve portion.

Due to the draft angles, the internal walls of the sleeve portion, to which the extruded part is attached, are angled. The angled internal walls of the sleeve portion make it difficult to provide a robust and stable connection with the extruded part. Specifically, an instable connection with a demanding joining method of the extruded part to the sleeve portion is the consequence.

The problem is at least partially solved or alleviated by the subject matter of the independent claims of the present disclosure, wherein further examples are incorporated in the dependent claims.

According to a first aspect, there is provided a method for manufacturing a rear part structure for a vehicle body, the method comprising:
- providing a die for a base part of the rear part structure, wherein the base part comprises a sleeve portion comprising a first wall and a second wall, and wherein the first and second walls are arranged opposite of one another;
- die casting the base part from metal using the die, wherein a slide of the die is tilted in relation to the second wall to produce no draft angle or a first draft angle of the first wall, wherein the first draft angle is smaller than a second draft angle of the second wall;
- inserting a first end portion of an extruded part of the rear part structure in between the first and second walls; and
- attaching the extruded part to the base part, wherein the extruded part comprises a second end portion opposite of the first end portion for attachment to a bumper of the vehicle body.

Accordingly, the manufacturing method proposed herein enables the manufacturing of a die casted base part with a sleeve portion for connection to the extruded part, wherein the sleeve portion has one wall of two opposite walls, which comprises a smaller draft angle than the other wall or no draft angle at all. Thereby, the wall with the smaller draft angle or no draft angle does not or at least to a less degree extend in an angle out of the base part and thus towards the extruded part, to which it is attached. Instead, the wall with the smaller draft angle or no draft angle may extend straight or substantially straight out of the base part and towards the extruded part. Specifically, the draft angle that is required on the sleeve portion due to the die casting process is offset towards one of the two opposite walls, creating a wall that is not or to a lesser degree angled. This wall on the extruded part allows for a more robust and stable connection of the extruded part inside the sleeve portion comprising the walls because the extruded part generally has straight walls due to the extrusion process. Specifically, one of the straight walls of the extruded part may better conform to the straight or substantially straight wall on the sleeve portion, thereby enabling a robust and stable connection of the extruded part and defined position at the rear part for optimal positioning of the bumper without any or relevant distortion.

In the context of die casting, a slide is a movable die tool of the die. In addition to movable die tools, the die may comprise several fixed die tools. A movable die tool, generally referred to herein as a slide, can be used to form undercut features or complex geometries on the casting that cannot be created with fixed die tools. In the present example, the slide is therefore inserted in the die to create the sleeve portion of the base part. Normally, the slide would not be tilted and retracted after casting, allowing for the ejection of the casted base part without damage. This would normally leave draft angles of or, in other words, on the opposite walls of the sleeve portion. However, by tilting the slide in relation to, in particular towards the second wall, the draft angle of or on the first wall is reduced and the draft angle of or on the second wall is increased. The connection or attachment of the extruded part may only or primarily be made on the first wall, which enables the stable and robust connection to the extruded part.

In the present context, the draft angle on the walls of the sleeve portion may refer to a taper or inclination applied to the walls of the sleeve portion during casting. This angle ensures that the slide can be smoothly ejected from the sleeve portion after solidification of the metal material. The draft angle may be measured relative to an axis of a die cavity formed by the die tools, which may be perpendicular to a parting line of the die or, in other words, mold.

Specifically, the walls may be extending vertically along a vertical axis of extension and horizontally along a horizontal axis of extension. The opposite walls may in particular be vertical walls with a greater extension vertically or, in other words, in height, than horizontally. The horizontal axis may coincide with a longitudinal axis of the vehicle body or vehicle. The draft angle may be an angle relative to the horizontal axis of extension or longitudinal axis of the vehicle body or vehicle. Accordingly, the draft angle may be between a horizontal extension of at least the second wall, and optionally the first wall in case there is a draft angle but smaller than the one of the second wall, and the longitudinal axis of the vehicle body or vehicle. The draft angle on the second wall and optionally on the first wall may be a slight outward slope. In case the first wall has no draft angle, there is no slope, but the first wall may extend substantially straight or along the longitudinal axis of the vehicle body or vehicle. The rear part structure may extend in width along the longitudinal axis of the vehicle body or vehicle. Further, the rear part structure may extend orthogonally to the longitudinal axis of the vehicle body or vehicle or, in other words, along a width axis of the vehicle body or vehicle. Accordingly, any reference herein towards the longitudinal axis may equally apply to the width or extension in width of the rear part structure.

The extruded part may generally be an elongated component formed by an extrusion process. In particular, the extruded part may be designed as an extruded beam or profile. The extruded part may for example be an extruded aluminum profile. In other words, the extruded part may have a beam structure. Specifically, the extruded part may be a beam. The extruded part may be having straight, parallel walls along its length. The walls may be surrounding a space. The space may be at least partially filled with a support structure connected to the walls of the extruded part, specifically to increase the structural integrity of the extruded part, e.g. a cross-shaped support structure. Specifically, the extruded part may comprise a rectangular cross-section with two pairs of walls, each pair of walls comprising two straight and parallel walls opposing each other. The extruded part may be sized to be fitted into the sleeve portion of the base part. The straight walls of the extruded part can align with and benefit from a corresponding wall of the sleeve portion that is formed without a draft angle or reduced draft angle, ensuring a snug fit and maintaining consistent contact along the mating surfaces of the first wall of the sleeve portion and the respective contact wall of the extruded part. Thereby, the absence of a draft angle or a reduced draft angle on the sleeve portion wall facilitates a uniform interface, optimizing alignment, structural stability, and load distribution between the extruded part and the sleeve portion in the event of a crash.

The base part of the rear part structure may be advantageously casted from metal, specifically as a single part in the form of a mega casting. For the mega casting process, a High-Pressure Die Casting (HDPC) process may be used, where the molten metal, such as but not limited to aluminum, is pushed into a die or, in other words, mold. This die consists of die tools that are pressed together and sealed just before the molten metal is pushed in. After the metal is pushed in, the tools are retracted, and the die opens again, and the casted metal rear part structure can be removed from the open die.

According to an example, the slide may be tilted in relation to, relative to or towards the second wall about or around two axes of a height axis, a width axis and a depth axis of the base part. Specifically, the slide may be tilted relative or towards the second wall around the height axis and the width axis. Thereby, no draft angle or a reduced draft angle compared to the second wall is created on the first wall along the height or vertically and along the width or horizontally, and thereby on the entire inner surface of the first wall.

According to an example, the slide may be tilted with a tilt angle in relation to or towards the second wall in the range of 0.5° to 3°, in particular in the range of 1° to 2°. This covers relevant draft angles for the created sleeve portion and slide that is advantageously being used. For example, the draft angle of the slide may be 1.5° on each side or, in other words, for each wall. Accordingly, when tilting the slide by 1.5° relative to or towards the second wall, an otherwise created draft angle on the first wall may be completely eliminated and the draft angle on the second wall may be created with 3° instead of 1.5°. The slide may be tilted about both axes as described herein with the same or different tilt angles.

According to an example, the slide may be tilted with a tilt angle in relation to, relative or towards the second wall which substantially corresponds to half of the second draft angle. Thereby, no draft angle is created on the first wall, which creates a substantially straight first wall for improved connection of the extruded part thereto.

According to an example, an outer wall of the first end portion of the extruded part may be substantially flush with the first wall. When substantially flush, the mating surfaces of the first wall and the outer wall are coextensive, ensuring an even and continuous contact. With the mating surfaces, the straight outer wall of the extruded part and the straight or substantially straight first wall of the sleeve portion are precisely aligned without gaps, offsets, or uneven transitions. This further improves the stability of the connection.

According to an example, the attaching of the extruded part to the base part may comprise fastening bolts between the extruded part and each one of the opposite walls. Accordingly, the fastening may be done not only on the first wall but also on the second wall for increased stability of the attachment and despite the increased draft angle on the second wall.

According to an example, the bolt between the extruded part and the first wall may be fastened before the bolt between the extruded part and the second wall is fastened. Thereby, the flush alignment of the first wall of the sleeve portion and the outer wall of the extruded part may be created, providing the particularly stable and robust connection of the extruded part to the base part. On the other hand, the second wall may consequently be fastened to the extruded part with the already established stable connection to the first wall, which will thus not influence the flush and stable connection between the first wall and outer wall.

According to an example, the second wall may be deformed by the fastening of the bolts. Further, the first wall may be substantially not deformed by the tightening of the bolts. This may be specifically achieved when tightening or, in other words, fastening the bolts on the first wall first and on the second wall thereafter.

According to an example, a bolt attachment portion of an outer surface of at least one of the walls may be machined flat for alignment with a bearing surface of a head of one of the bolts. Thereby, the stability of the attachment may be increased further, specifically by a flush mating surface between the head of the bolt and the flat outer surface.

According to a second aspect, there is provided rear part structure for a vehicle body, the rear part structure comprising a die casted base part made from metal, wherein the base part comprises a sleeve portion comprising a first wall and a second wall, wherein the first and second walls are arranged opposite of one another, and wherein the first wall has no draft angle or a first draft angle of the first wall that is smaller than a second draft angle of the second wall. The rear part structure may further comprise an extruded part, wherein a first end portion of the extruded part is inserted in between the opposite walls and attached to the base part, wherein the extruded part comprises a second end portion opposite of the first end portion for attachment to a bumper of the vehicle body.

According to an example, the base part may further comprise wheelhouse portions for partially housing a wheel therein. The wheelhouse portions may be located at opposite ends of the rear part structure with the sleeve portion being located in between the opposite ends of the rear part structure. Specifically, the wheelhouse portions may be located at opposite ends along a width direction or extension or axis of the base part or rear part structure.

According to an example, the base part and the extruded part may comprise aluminum. In particular, the die casted base part may be made from one single material, specifically a metal, e.g., aluminum or an aluminum alloy. Such aluminum casting may be made entirely from aluminum or can comprise aluminum, e.g., predominantly aluminum, and other materials, specifically metals. Additionally, or alternatively, the extruded part may be extruded from aluminum or a predominantly aluminum.

According to an example, the bumper may be attached to the second end portion of the extruded part by one or more fasteners. For example, bolts may be attaching the bumper or, in other words, vehicle or vehicle body bumper to the extruded part.

According to an example, the rear part structure of the second aspect of this disclosure may be manufactured according to the method of the first aspect of this disclosure.

Alternatively, or additionally, according to another aspect, there may be provided a rear part structure manufactured according to the method of the first aspect of this disclosure.

According to a third aspect, there is provided a vehicle comprising a vehicle body, the vehicle body comprising the rear part structure of any one of the aspects mentioned herein.

It is noted that the above examples may be combined with each other irrespective of the aspect involved. Accordingly, the manufacturing method may be combined with structural features of the rear part structure and, likewise, the rear part structure may be combined with features described above with regard to the manufacturing method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a partial perspective view on a base part of a rear part structure after being formed between die tools;
- Figure 2: shows a perspective partial view on the base part of the rear part structure of Fig. 1;
- Figure 3: shows a slide being tilted about a height axis during die casting the base part of Fig. 2;
- Figure 4: shows a slide being tiled about a width axis during die casting the base part of Fig. 2;
- Figure 5: shows a perspective partial view of the rear part structure with the extruded part attached to the base part;
- Figure 6: shows a cross-sectional view through the sleeve portion and extruded part; and
- Figure 7: shows a detailed view on the cross-section through the the sleeve portion and extruded part of Fig. 6.

### DETAILED DESCRIPTION

The Figures are merely schematic representations and serve only to illustrate examples of the disclosure. Identical or equivalent elements are in principle provided with the same reference signs.

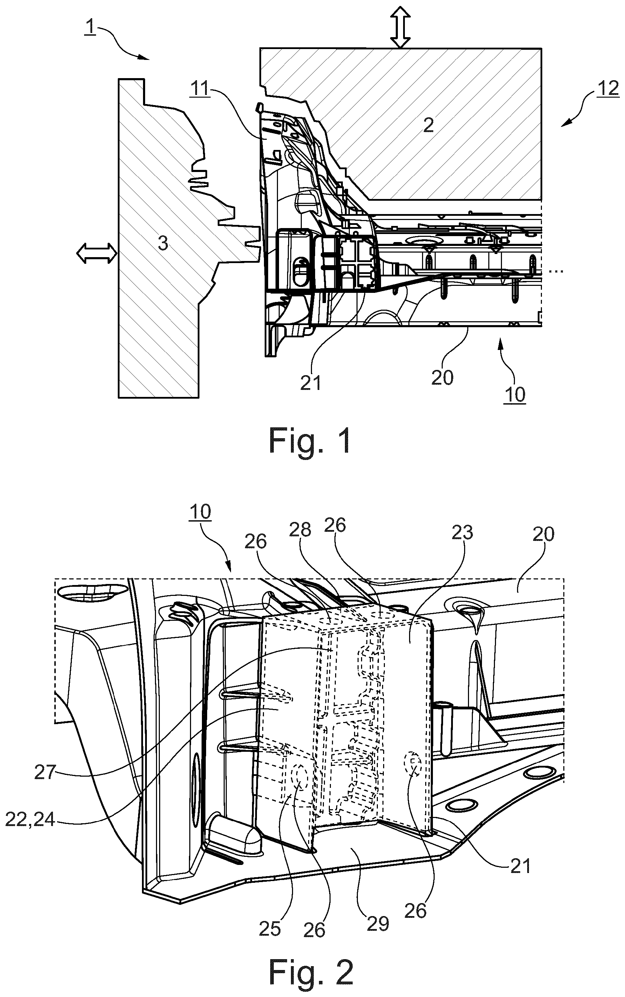

Fig. 1 shows a partial perspective view on a base part 20 of a rear part structure 10 for a vehicle body of a vehicle.

The rear part structure 10 comprises a base portion 20, which may for example comprise two wheelhouse portions located at opposite ends 11, 12 of the base portion 20 or rear part structure 10 (in Fig. 1, only the left wheelhouse portion located at end 11 is shown, whereas the partial view does not show the other end 12 which is indicated in its location by the reference sign 12). The wheelhouse portions are arranged for partially housing a wheel therein. A base part portion of the base part 20 may extend in length between the two wheelhouse portions.

The base part 20 of the rear part structure 10 is manufactured by casting it from metal, specifically as a single part in the form of a mega casting. Specifically, Fig. 1 shows the casting process of the base part 20 as part of the rear part structure 10 using fixed die tools 2, 3, which are retrieved from the die 1 in opposite directions.

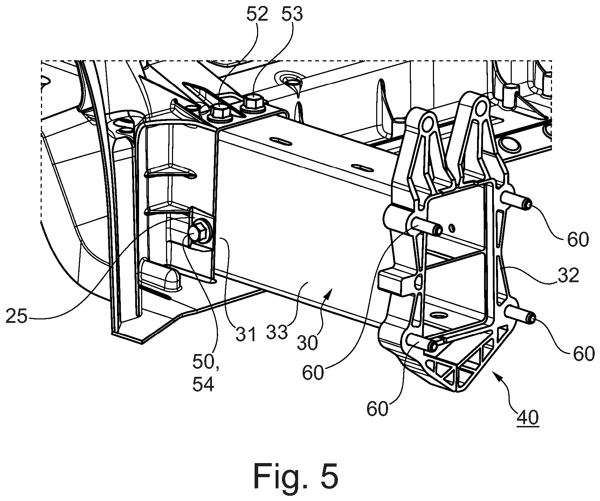

For attaching a bumper 40 (not explicitly shown but indicated in its location in Fig. 5) to the base part 20 or rear part structure 10, the base part 20 is casted or formed with a sleeve portion 21 as seen in Fig. 1 and in more detail in Fig. 2.

Figure 2 shows a perspective partial view on the base part 20 of the rear part structure 10 of Fig. 1. The sleeve portion 21 is formed at a rear end of the base part 20 for attachment to the bumper 40. Specifically, the sleeve portion 21 serves as a connection for an extruded part 30 as seen in Fig. 5.

The sleeve portion 21 comprises a first wall 22 and a second wall 23 arranged opposite of one another. Both walls 22, 23 are vertical walls in this example, i.e. they have a larger extension in the vertical direction or plane than in the horizontal direction or plane.

Additionally, the sleeve portion 21 comprises a third wall 28 and fourth wall 29 arranged opposite of one another and forming the sleeve portion 21 or sleeve shape of the sleeve portion 21 together with walls 22, 23. Both walls 28, 29 are horizontal walls in this example, i.e. they have a larger extension in the horizontal direction or plane than in the vertical direction or plane. Since the exterior of walls 28, 29 may be formed by fixed die tools 2, 3 coming from above and/or below, it may be possible to have no draft angle on one of these walls 28, 29 or both. Specifically, a draft angle on the upper one of the two walls 28, 29 may be prevented, which thereby may be substantially straight or straight similar to the first wall 22. This gives two substantially straight walls 22, 28 with straight surfaces for aligning the outer walls of the extruded part 30 there in a flushing manner and thereby provide a stable connection.

Further, the sleeve portion 21 comprises a rear wall 27, towards which the extruded part 30 is inserted inside the sleeve portion 21 and which the extruded part 30 may or may not come in contact with after attachment.

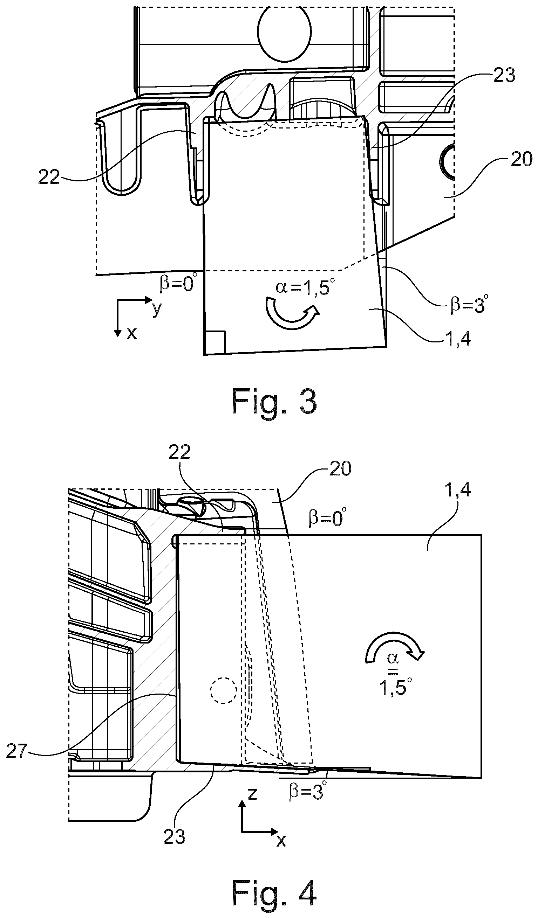

Figures 3 and 4 show the usage of a slide 4 as a moveable die tool and part of the die 1 during the casting process of the base part 20. Specifically, Figs. 3 and 4 show a detail on the casting of the sleeve portion 21 inside the die cavity. Here, the slide 4 forms the space or cavity or generally the sleeve portion 21 of the base part 20. Specifically, the slide is inserted into the molten metal material inside the die cavity to form the sleeve portion 21 with its walls 22, 23, 28, 29 as part of the base part 20.

The slide 4 comprises angled outer walls or surfaces such that a draft angle is produced on the walls 22, 23. Therefore, in a normal casting process using slide 4, the walls 22, 23 would be produced with a draft angle or, in other words, angled. Specifically, both walls 22, 23 would normally be angled with respect to or relative to the depth axis x seen in Figs. 3 and 4. The depth of the base part 20 extends along the depth axis x. Additionally, the vehicle body or vehicle, when the rear part structure 10 is attached thereto or formed therewith, specifically to the other structures or body structures (not shown) of the rear part structure 10 that together form it, may longitudinally extend along the depth axis x. Specifically, the depth axis x and a longitudinal axis of the vehicle body or vehicle may coincide. Accordingly, both walls 22, 23 would normally be slanted or inclined at an angle relative to the depth axis x or longitudinal vehicle body or vehicle axis, the angle corresponding to the angled walls or surfaces of the slide 4.

In the method for manufacturing the rear part structure 10, however, the draft angle on or of the first wall 22 is reduced or completely prevented or omitted. Specifically, after providing the die 1 for the base part 20 die casting, the slide 4 is being tilted during the casting process and/or the slide 4 is inserted tilted during the casting process or into or inside the die 1.

The slide 4 is tilted in relation or towards the second wall 23 as may be seen in Fig. 3 about a height axis z perpendicular to a width axis y and the depth axis x. The base part 20 extends in height along the height axis z and in width or length along the width axis y. The tilting angle α by which the slide 4 is tilted is 1.5° in this example. Given that the slide 4 has angled outer walls or surfaces at 1.5° in this example, this produces an increased draft angle β of 3° on the second wall 23 but substantially no draft angle β or a very low draft angle β of about 0° on the first wall 22 along its height.

Additionally, as seen in Fig. 4, the slide 4 is also tilted by a tilting angle α of 1.5° relative or towards the second wall 23 about the width axis y perpendicular to the height axis z and the depth axis x. This produces an increased draft angle β of 3° on the second wall 23 but substantially no draft angle β or a very low draft angle β of about 0° on the first wall 22 along its width, which therefore extends planarly substantially straight out of the base part 20 or relative to the depth axis x.

Therefore, as seen in Fig. 5, the extruded part 30 may be inserted with its first end portion 31 into the sleeve portion 21 such that its outer straight wall 33 is flush with the substantially straight first wall 22 and optionally the rear wall 27. The absence of a draft angle or a reduced draft angle on the first wall 22 thereby facilitates a uniform interface, optimizing alignment, structural stability, and load distribution between the extruded part 30 and the sleeve portion 21 in the event of a crash.

The extruded part 30 is shown herein as a rectangularly shaped extruded beam, e.g. made from or comprising aluminum. Similarly, the base part 20 may be made from or comprise aluminum. Accordingly, the sleeve portion 21 is also shaped rectangularly in this example, specifically with a rectangular space or cavity in between the walls 22, 23, 28, 29, into which the first end portion 31 of the extruded part 30 may fit. Specifically, the outer dimensions of the extruded part 30 at least at the first end portion 31 may correspond to inner dimensions of the sleeve portion 21.

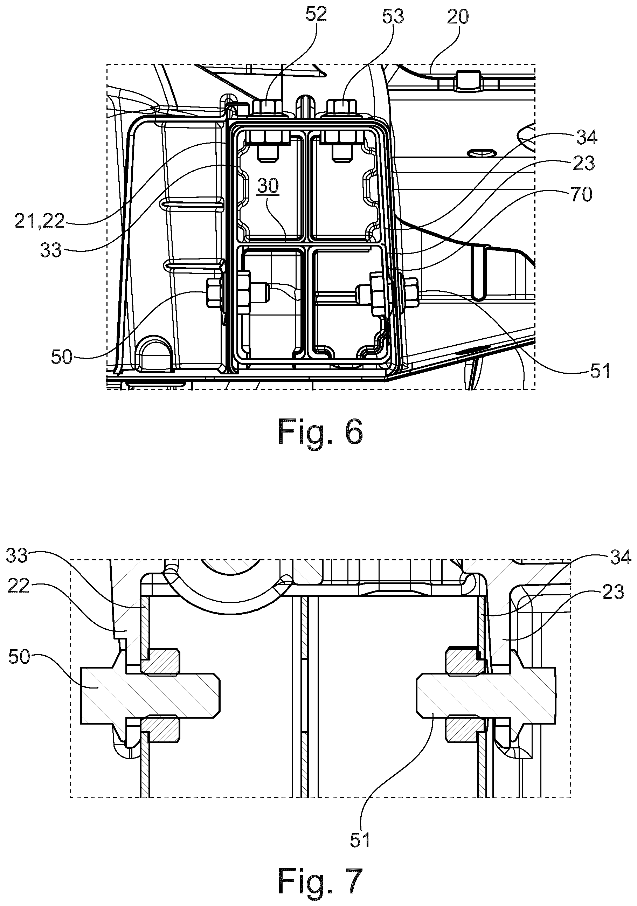

By means of fasteners in the form of bolts 50 and 51 (see Figs. 6 and 7 for bolt 51 opposite of bolt 50 seen in Fig. 5), the walls 22, 23 are attached to the outer straight walls 33, 34 (see Figs. 6 and 7 for outer straight wall 34 opposite of outer straight wall 33 seen in Fig. 5). Additional bolts 52, 53 are used to attach the wall 28 to the upper wall of the extruded part 30.

Corresponding holes 26 were machined into the sleeve portion 21 for inserting the bolts 50, 51, 52, 53 therethrough after the casting of the base part 20. Also, the outer surface 24 of the first wall 22 is seen to be machined flat with a bolt attachment portion 25 for alignment with a bearing surface of a head 54 of the bolt 50. Similarly, the second wall 23 may be machined flat with a bolt attachment portion for alignment with a bearing surface of a head of the bolt 51.

A second end portion 32 of the extruded part 30 opposite of the first end portion 31 attaches to bumper 40 through several fasteners 60, e.g. further bolts. The alignment of these fasteners towards the bumper 40 is important to connect the bumper 40 in a define position and orientation relative to the base part 20 and without deformation or distortion. As seen in Fig. 6, the extruded part 30 may have a support structure inside the outer walls 33, 34, which may for example have a cross-shaped cross-section.

Further, as seen in Figs. 6 and 7, the second wall 23 may comprise a deformation 70 or generally be deformed after fastening the bolts 50, 51, whereas the second wall 22 maybe substantially undeformed. If the slider 4 was not tiled, both walls 22, 23 would have this deformation 70.

Specifically, bolt 50 may be fastened before bolt 51, thereby enabling a flush alignment of walls 22, 33, where the walls 22, 33 are seen to be parallel to each other in Fig. 7. On the other hand, the wall 23 is pulled towards wall 34 by the fastening of bolt 51 and walls 23, 34 are seen not to extend parallel to one another. Further, the bolts 52, 53 may be fastened before bolt 51, to thereby also provide a flush alignment of wall 28 with the outer wall of the extruded part 30 opposite of wall 28. Due to the flush alignment of walls 22, 28 of sleeve portion 21 with the walls 33 of the extruded part 30, the stability of the connection and the defined position of the bumper 40 relative to the base part 20 is maintained.

In addition to the shown extruded part 30 and the sleeve portion 21, the base part 20 may have another sleeve portion 21 and extruded part 30 connected to the same bumper 40 on a right side of the base part 20 or rear part structure 10 in addition to the left side or section shown in Fig. 1.

Ultimately, the rear part structure 10 is of great importance for the rear crash properties of the vehicle. Specifically, the extruded parts 30 of the rear part structure 10, which may be aluminum profiles, are supposed to deform as they are easily replaced with new ones as they are bolted to the base part 20. Therefore, the extruded parts 30 typically need to be attached in a sturdy and reliable way. However, as the extruded parts 30 are extruded, it would be advantageous to have straight walls 22, 23. Due to the die casting of the base part 20, however, the walls 22, 23 are typically produced with draft angles. The draft angle of the walls 22, 23 however would create a weaker connection and pre-tension in the walls 22, 23 when tightening the bolts 50, 51 and fastening these to the walls 33, 34 of the extruded part 30, which is not desired.

To solve this and create an efficient, reliable and strong connection the slider 4 may be angled, specifically in two directions with the same angle as the draft angle, downwards and inwards, as shown in Figs. 3 and 4. This may result in two walls 22, 28 out of four walls 22, 23, 28, 29 being parallel to the straight walls 33, 34 of the extruded part 30. This avoids expensive machining, making assembly easier due to reliable geometry, strong screw connections and minimizing the pre-tension.

The tightening of the bolts 50, 51, 52, 53 may be done in the herein specified sequence so the extruded part 30 lands on the parallel walls 22, 28 first. Specifically, the bolts 50, 52, 53 may be tightened or fastened first and the bolt 51 may be tightened only after that. This may be important since the bolts 50, 51, 52, 53 may take dynamic load during the lifetime of the vehicle, and if the extrude part 30 already has deformed due to tightening of the bolts 50, 51, 52, 53 during assembly, the durability of these joints could be lowered.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: die
- 2, 3: fixed die tools
- 4: slide
- 10: rear part structure
- 11, 12: ends
- 20: base part
- 21: sleeve portion
- 22: first wall
- 23: second wall
- 24: outer surface
- 25: bolt attachment portion
- 26: holes
- 27: rear wall
- 28: third wall
- 29: fourth wall
- 30: extruded part
- 31: first end portion
- 32: second end portion
- 33: first outer wall
- 34: second outer wall
- 40: bumper
- 50: first bolt
- 51: second bolt
- 52: third bolt
- 53: fourth bolt
- 54: head
- 60: fastener

- 70: deformation
- z: height axis
- x: depth axis
- y: width axis
- α: tilt angle
- β: draft angle

## Claims

1. A method for manufacturing a rear part structure (10) for a vehicle body, the method comprising:
- providing a die (1) for a base part (20) of the rear part structure (10), wherein the base part (20) comprises a sleeve portion (21) comprising a first wall (22) and a second wall (23), and wherein the first and second walls (22, 23) are arranged opposite of one another;
- die casting the base part (20) from metal using the die (1), wherein a slide (4) of the die (1) is tilted in relation to the second wall (23) to produce no draft angle or a first draft angle (β) of the first wall (22), wherein the first draft angle (β) is smaller than a second draft angle (β) of the second wall (23);
- inserting a first end portion (31) of an extruded part (30) of the rear part structure (10) in between the first and second walls (22, 23); and
- attaching the extruded part (30) to the base part (20), wherein the extruded part (30) comprises a second end portion (32) opposite of the first end portion (31) for attachment to a bumper (40) of the vehicle body.

2. The method of claim 1, wherein the slide (4) is tilted in relation to the second wall (22) about two axes of a height axis (z), width axis (y) and depth axis (x) of the base part (20).

3. The method of claim 1 or 2, wherein the slide (4) is tilted with a tilt angle (α) in relation to the second wall (22) in the range of 0.5° to 3°, in particular in the range of 1° to 2°.

4. The method of any one of the previous claims, wherein the slide (4) is tilted with a tilt angle (α) in relation to the second wall (22) which substantially corresponds to half of the second draft angle (β).

5. The method of any one of the previous claims, wherein an outer wall (33) of the first end portion (31) of the extruded part (30) is substantially flush with the first wall (22).

6. The method of any one of the previous claims, wherein the attaching of the extruded part (30) to the base part (20) comprises fastening bolts (50, 51) between the extruded part (30) and each one of the opposite walls (22, 23).

7. The method of claim 6, wherein the bolt (50) between the extruded part (30) and the first wall (22) is fastened before the bolt (51) between the extruded part (30) and the second wall (23) is fastened.

8. The method of claim 6 or 7, wherein the second wall (23) is being deformed by the fastening of the bolts (50, 51), and the first wall (22) is substantially not being deformed by the tightening of the bolts (50, 51).

9. The method of any one of claims 6 to 8, wherein a bolt attachment portion (25) of an outer surface (24) of at least one of the walls (22, 23) is machined flat for alignment with a bearing surface of a head (54) of one of the bolts (50, 51).

10. A rear part structure (10) for a vehicle body, the rear part structure (10) comprising:
- a die casted base part (20) made from metal, wherein the base part (20) comprises a sleeve portion (21) comprising a first wall (22) and a second wall (23), wherein the first and second walls (22, 23) are arranged opposite of one another, and wherein the first wall (22) has no draft angle or a first draft angle (β) of the first wall (22) that is smaller than a second draft angle (β) of the second wall (23); and
- an extruded part (30), wherein a first end portion (31) of the extruded part (30) is inserted in between the opposite walls (22, 23) and attached to the base part (20), wherein the extruded part (30) comprises a second end portion (32) opposite of the first end portion (31) for attachment to a bumper (40) of the vehicle body.

11. The rear part structure (10) of claim 10, wherein the base part (20) further comprises wheelhouse portions for partially housing a wheel therein, the wheelhouse portions being located at opposite ends (11, 12) of the rear part structure (10) with the sleeve portion (21) being located in between the opposite ends (11, 12) of the rear part structure (10).

12. The rear part structure (10) of claim 10 or 11, wherein the base part (20) and the extruded part (30) comprise aluminum.

13. The rear part structure (10) of any one of claims 10 to 12, wherein the bumper (40) is attached to the second end portion (32) of the extruded part (30) by one or more fasteners (60).

14. The rear part structure (10) of any one of claims 10 to 13, wherein the rear-part structure (10) is manufactured according to the method of any one of claims 1 to 9.

15. A vehicle comprising a vehicle body, the vehicle body comprising the rear part structure (10) according to any one of claims 10 to 14.
